# EUROPÄISCHE PATENTSCHRIFT

(11) **EP 0 731 290 B1**
(45) Veröffentlichungstag und Bekanntmachung des Hinweises auf die Patenterteilung: **31.05.2000**
(21) Anmeldenummer: 96103271.1
(22) Anmeldetag: 02.03.1996
(51) Int. Cl.: F16H 3/093

(54) **Nebenwellengetriebe**
Countershaft transmission
Transmission à arbres intermédiaires

(30) Priorität: 07.03.1995 US 399782
(43) Veröffentlichungstag der Anmeldung: 11.09.1996
(60) Teilanmeldung: 99121622.7
(73) Patentinhaber: DEERE & COMPANY, Moline, Illinois 61265-8098 (US)
(72) Erfinder: McAskill, John Pearce, Coffeyville, KS 67337 (US)
(74) Vertreter: Feldmann, Bernhard

(56) Entgegenhaltungen:
- US-A- 5 063 793
- US-A- 5 249 475
- FÖRSTER: 'AUTOMATISCHE FAHRZEUGGETRIEBE', 1991, SPRINGER VERLAG, BERLIN * Seite 515 *

## Beschreibung

Die Erfindung betrifft ein Getriebe gemäß dem Oberbegriff des Patentanspruchs 1 sowie ein Verfahren zur Bereitstellung mehrerer Gänge in einem derartigen Getriebe gemäß dem Oberbegriff des Patentanspruchs 20.

Die Erfindung bezieht sich insbesondere auf Nebenwellengetriebe, insbesondere auf Nebenwellengetriebe, die eine große Anzahl von Gängen bereitstellen, welche für die Verwendung in Arbeitsfahrzeugen, wie landwirschaftliche Traktoren und gewerbliche Maschinen geeignet sind.

Für eine hohe Leistungsfähigkeit in einem großen Aufgabenbereich weisen Arbeitsfahrzeuge, wie beispielsweise landwirtschaftliche Traktoren und industrielle Maschinen eine große Anzahl von Gängen auf. Bedienungspersonen bevorzugen gewöhnlich Fahrzeuge mit einem großen Anteil an Vorwärtsgängen im regulären Arbeitsbereich, der ungefähr zwischen fünf und fünfzehn Kilometern pro Stunde liegt.

Häufig werden in diesen Arbeitsfahrzeugen Nebenwellengetriebe mit zahlreichen rotierenden Komponenten, wie Wellen, Zahnrädern, Kupplungen und Lagerungen verwendet. Bei einem typischen Nebenwellengetriebe enthält der Antriebsstrang einen Wechselgetriebeteil, der mit einem Gruppengetriebeteil verbunden ist. Üblicherweise ist der Wechselgetriebeteil dem Gruppengetriebeteil vorgeschaltet und nimmt die Getriebeeingangsleistung von einem Motor auf. Der Gruppengetriebeteil wird verwendet, um eine Gruppe oder Folge von Betriebsdrehzahlen für die Ausgangsleistung auszuwählen. Für jede ausgewählte Einstellung des Gruppengetriebeteils kann mittels des Wechselgetriebeteils aus der Folge der Gänge ein beliebiger Gang ausgewählt werden.

Es gibt viele Möglichkeiten ein Nebenwellengetriebe zu verbessern. Dabei kann die Schaltzeit verringert und die Weichheit des Schaltens erhöht werden, indem die während der Umschaltung zwischen verschiedenen Bereichen an den sich drehenden Komponenten auftretende Änderung des übertragenen Energieniveaus verringert wird. Ferner kann durch eine Verringerung der Komponentenzahl der für den Zusammenbau des Getriebes erforderliche Materialeinsatz verringert werden. Darüber hinaus läßt sich durch eine Steigerung der Kompaktheit des Nebenwellengetriebes der für das Getriebe im Arbeitsfahrzeug erforderliche Raum verringern und damit die Flexibilität beim Einpassen des Getriebes in ein Fahrzeug steigern.

Gegenwärtig baut und verkauft Funk Manufacturing Company ein Nebenwellengetriebe für landwirtschaftliche Traktoren, welches achtzehn Vorwärts- und neun Rückwärtsgänge aufweist. Sieben der Vorwärtsgänge liegen in dem regulären Arbeitsbereich. Das Getriebe verwendet zweiundzwanzig Zahnräder und neun Kupplungen, die so angeordnet sind, daß sechs Kupplungen den Wechselgetriebeteil und drei Kupplungen den Gruppengetriebeteil bilden. Darüber hinaus ist eine der Kupplungen dazu bestimmt, einen Bereich bereitzustellen, der ausschließlich die Rückwärtsgänge enthält. Ferner sind die Wellen in Längsrichtung zueinander derart versetzt angeordnet, daß sie in drei zusammengesetzte Wandungen drehbar gelagert sind, welche das Gehäuse bilden. Das Getriebe ist derart aufgebaut, daß jede Übersetzungsfolge ausschließlich entweder zur Herabsetzung, zur Beibehaltung oder zur Steigerung der an den Wechselgetriebeteil übertragenen Drehzahl dient. Ein erster Bereich umfaßt neun Vorwärtsgänge. Ein zweiter Bereich umfaßt neun Vorwärtsgänge, die sich an die Gänge des ersten Bereichs anschließen. Ein dritter Bereich enthält neun Rückwärtsgänge. Daher ist es bei einer Gruppenumschaltung zwischen den Vorwärtsgängen erforderlich, daß eine vollständige Änderung des zwischen den verschiedenen Bereichen herrschenden Energieniveaus vorgenommen wird.

Die gattungsbildende US-A-5,063,793 beschreibt ein Nebenwellengetriebe mit vierundzwanzig Vorwärtsgängen und zwölf Rückwärtsgängen. Abgesehen von einer wahlweisen Zapfwelle verwendet eine bevorzugte Ausbildung des Getriebes fünfundzwanzig Zahnräder und 10 Kupplungen, die so angeordnet sind, daß sechs Kupplungen den Wechselgetriebeteil und vier Kupplungen den Gruppengetriebeteil bilden. Die sechs Kupplungen des Wechselgetriebeteils sind so angeordnet, daß sie sechs Vorwärtsgänge und drei Rückwärtsgänge bilden. Es ist somit keine Gruppe ausschließlich für Rückwärtsgänge vorgesehen. Ferner sind die Wellen in Längsrichtung zueinander versetzt. Das Getriebe ist derart aufgebaut, daß jede Übersetzungsfolge ausschließlich entweder zur Herabsetzung, zur Beibehaltung oder zur Steigerung der an den Wechselgetriebeteil übertragenen Drehzahl dient. Jeder der vier Bereiche enthält sich aneinander anschließende Gruppen von sechs Vorwärtsgängen und drei Rückwärtsgängen. Daher ist es bei einer Gruppenumschaltung erforderlich, daß eine vollständige Änderung des zwischen den verschiedenen Bereichen herrschenden Energieniveaus vorgenommen wird.

Selbst mit den Verbesserungen, die an den Nebenwellengetrieben für Arbeitsfahrzeuge, wie beispielsweise landwirtschaftliche Traktoren oder gewerbliche Maschinen, vorgenommen wurden, ist es noch wünschenswert, die während einer Umschaltung zwischen unterschiedlichen Gruppen auftretende Änderung des Energieniveaus der sich drehenden Komponenten weiter herabzusetzen. Ferner ist es wünschenswert, die Komponentenzahl des Getriebes weiter zu verringern und die Kompaktheit des Getriebes zu steigern.

Die der Erfindung zugrunde liegende Aufgabe wird darin gesehen, bei einem gattungsgemäßen, eine Vielzahl von Gängen aufweisenden Getriebe, die Anzahl der sich drehenden Komponenten zu verringern und die Kompaktheit des Getriebes zu erhöhen. Es ist auch wünschenswert, daß ein großer Anteil der Vorwärtsgänge in dem regulären Arbeitsbereich liegt, während die Kompaktheit des Getriebes gesteigert wird. Ferner soll ein Verfahren angegeben werden, durch das unter Berücksichtigung der genannten Aufgabe, mehrere Gänge in einem Nebenwellengetriebe bereitgestellt werden.

Die Aufgabe wird erfindungsgemäß durch die Lehre eines der unabhängigen Patentansprüche 1 und 20 gelöst. Weitere vorteilhafte Ausgestaltungen und Weiterbildungen der Erfindung gehen aus den Unteransprüchen hervor.

Das erfindungsgemäße Getriebe enthält eine Eingangswelle, mehrere Nebenwellen und eine Ausgangswelle, die in einem Gehäuse drehbar gelagert sind. Die Eingangswelle weist zur Aufnahme der Eingangsleistung ein Eingangsende auf. Mit der Eingangswelle ist ein Eingangszahnrad drehfest verbunden. Die Ausgangswelle enthält ein Ausgangsende über das die Ausgangsleistung abgegeben wird. Mit der Ausgangswelle und mit jeder Nebenwelle ist je ein Festzahnrad drehfest verbunden. Auf der Ausgangswelle und jeder Nebenwelle sind wenigstens je ein Zahnrad drehbar gelagert. Jedes drehbare Zahnrad läßt sich durch eine zugehörige Kupplung wahlweise mit seiner Welle drehfest verbinden. Mehrere der drehbaren Zahnräder bilden einen Eingangssatz, der mit dem Eingangszahnrad in Eingriff steht. Ein beliebig ausgewähltes drehbares Zahnrad des Eingangssatzes kann auf seiner Welle festgesetzt werden und treibend mit einer aus einem Satz von Übersetzungskombinationen beliebig ausgewählten Übersetzungskombination verbunden werden, wobei die Übersetzungskombinationen durch den jeweiligen Eingriff mehrerer Zahnräder gebildet werden, um eine Getriebeausgangsdrehzahl an dem Ausgangsende der Ausgangswelle bereitzustellen. Eine Übersetzungssequenz, die durch treibendes Verbinden mehrerer drehbar gelegerten Zahnräder gebildet wird, liefert eine Absenkung der Drehzahl für wenigstens eine der Übersetzungskombinationen sowie eine Steigerung der Drehzahl für wenigstens eine andere Übersetzungskombination.

Gemäß eines anderen Aspekts der vorliegenden Erfindung hat das Getriebe einen Wechselgetriebeabschnitt und einen Gruppengetriebeabschnitt. Mehrere Nebenwellen sind als Wechselgetriebenebenwellen ausgelegt, um den Wechselgetriebeabschnitt zu bilden. Eine erste und eine zweite Gruppennebenwelle und eine Ausgangswelle bilden den Gruppengetriebeabschnitt. Durch eine Anordnung des Wechselgetriebeabschnitts kann ein beliebig ausgewähltes drehbares Zahnrad eines Eingangssatzes auf seiner Welle festgelegt werden und treibend mit einer beliebig ausgewählten Wechselgetriebekombination eines Satzes von Wechselgetriebekombinationen verbunden werden, wobei die Wechselgetriebekombinationen durch die Verwendung mehrerer Zahnräder des Wechselgetriebeabschnitts gebildet werden, um Wechselgetrieberesultate zu liefern. Durch eine Anordnung des Gruppengetriebeabschnitts werden die Wechselgetrieberesultate mit einer beliebig auswählbaren Gruppengetriebekombination eines Satzes von Gruppengetriebekombinationen antriebsmäßig verbunden, wobei die Gruppengetriebekombinationen durch die Verwendung mehrerer Zahnräder des Gruppengetriebeabschnitts gebildet werden, um Ausgangsdrehzahlen an dem Ausgangsende der Ausgangswelle bereitzustellen. Ein mittlerer Drehzahlbereich für die Ausgangsleistung enthält wenigstens einen Gang, der tiefer liegt als wenigstens ein Gang eines unteren Drehzahlbereichs für die Augangsleistung und wenigstens einen anderen Gang, der höher liegt, als wenigstens ein Gang eines höheren Drehzahlbereichs für die Ausgangsleistung.

Entsprechend eines weiteren Aspekts der Erfindung werden durch ein Verfahren zur Bereitstellung einer Vielzahl von Gängen mehrere drehbar gelagerten Zahnräder antriebsmäßig miteinander verbunden, um eine Gangübersetzungssequenz zu bilden. Diese ist sowohl in wenigstens einer Übersetzungskombination enthalten, um die übertragenen Drehzahlen herabzusetzen, als auch in wenigstens einer anderen Gangübersetzungskombination enthalten, um die übertragenen Drehzahlen zu erhöhen.

Gemäß eines weiteren Aspekts der Erfindung wird durch ein Verfahren zur Bereitstellung einer Vielzahl von Gängen wenigstens ein Gang eines mittleren Drehzahlbereichs mit wenigstens einem Gang eines unteren Drehzahlbereichs sowie wenigstens ein anderer Gang des mittleren Drehzahlbereichs mit wenigstens einem Gang eines höheren Drehzahlbereichs versetzt oder abwechselnd angeordnet.

Anhand der Zeichnung, die ein Ausführungsbeispiel der Erfindung zeigt, werden nachfolgend die Erfindung sowie weitere Aufgaben, Vorteile und neu, vorteilhafte Weiterbildungen und Ausgestaltungen der Erfindung näher beschrieben und erläutert.

Es zeigt:
- Fig. 1: eine schematische Darstellung, aus der die Wechselbeziehung zwischen den Fig. 2A und 2B hervorgeht,
- Fig. 2: die aus den Fig. 2A und 2B bestehende Querschnittsansicht eines erfindungsgemäßen Getriebes und
- Fig. 3 bis 7: Teilansichten entlang der in Fig. 2 dargestellten Linien 3-3 bis 7-7.

Zur Erleichterung des Verständnisses beginnen in der nachfolgenden Beschreibung Bezugnahmen auf Wellen mit einem Referenzbuchstaben S, an den sich eine Zahl anschließt. Jede Bezugnahme auf ein Festzahnrad, d. h. ein Zahnrad, das integraler Bestandteil einer Welle ist oder auf sonst eine Weise drehfest mit der Welle verbunden ist, beginnt mit den Referenzbuchstaben GF und endet mit der Referenznummer seiner zugehörigen Welle. Beispielsweise ist das Festzahnrad GF1 mit der Welle S1 drehfest verbunden. Bezugnahmen auf drehbare Zahnräder, d. h. Zahnräder, die sich wahlweise auf ihrer Welle drehen lassen oder sich durch eine zugehörige Kupplung mit ihrer Welle drehfest verbinden lassen, beginnen mit den Referenzbuchstaben GR. Jede Bezugnahme auf eine Kupplung beginnt mit dem Referenzbuchstaben C und endet mit einer Referenznummer oder einem Referenzbuchstaben. Um die Wechselbeziehung zwischen den drehbaren Zahnrädern und ihren zugehörigen Kupplungen kenntlich zu machen, wird an die Referenzbuchstaben der drehbaren Zahnräder die Referenznummer oder der Referenzbuchstaben der zugehörigen Kupplung angehängt. Beispielsweise gehört das drehbare Zahnrad GR1 zu der Kupplung C1 und das drehbare Zahnrad GRA zu der Kupplung CA. Jede Bezugnahme auf mehrere drehbare Zahnräder, denen dieselbe Kupplung zugeordnet ist, endet mit einem fortlaufenden Buchstaben. Beispielsweise sind die drehbaren Zahnräder GRBA und GRBB der Kupplung CB zugeordnet.

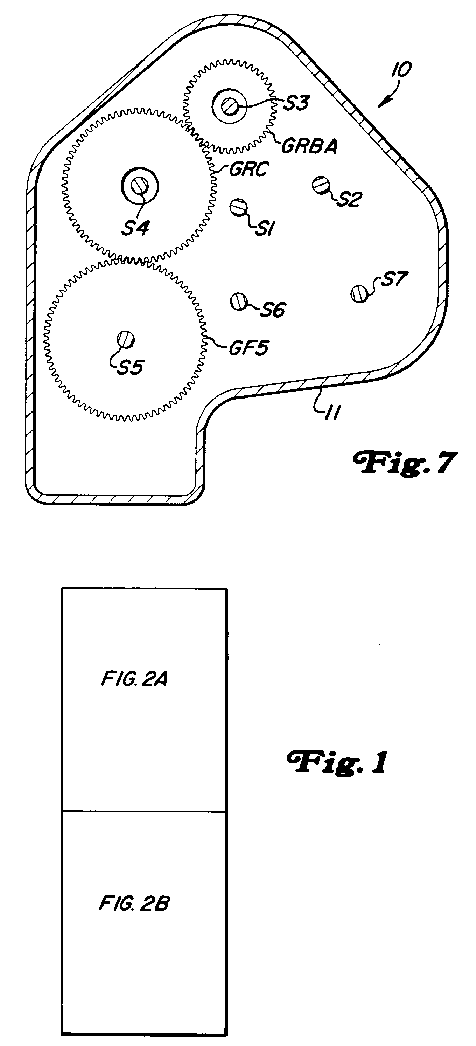

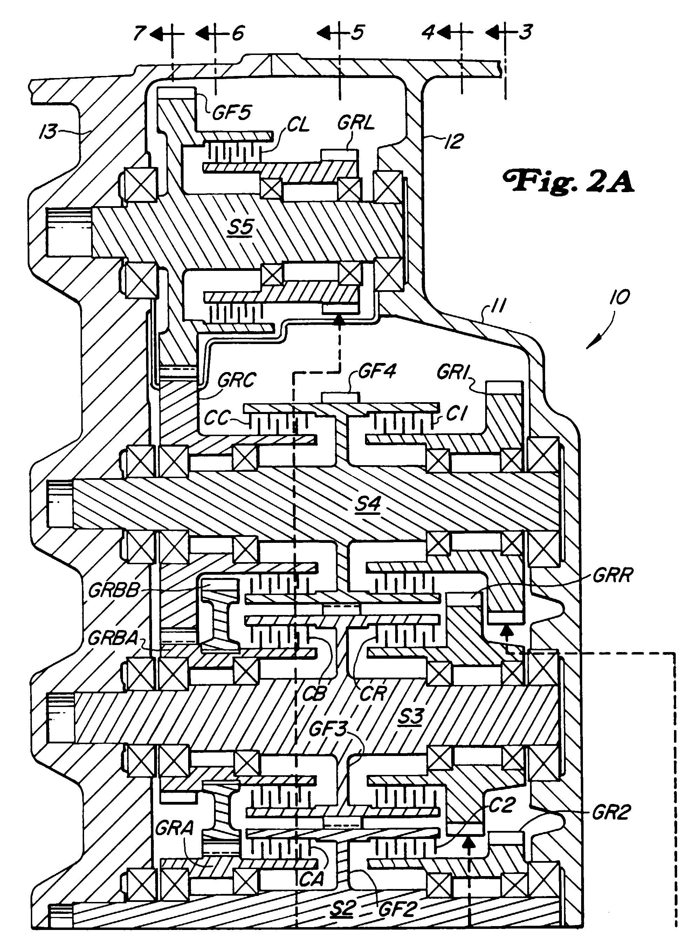

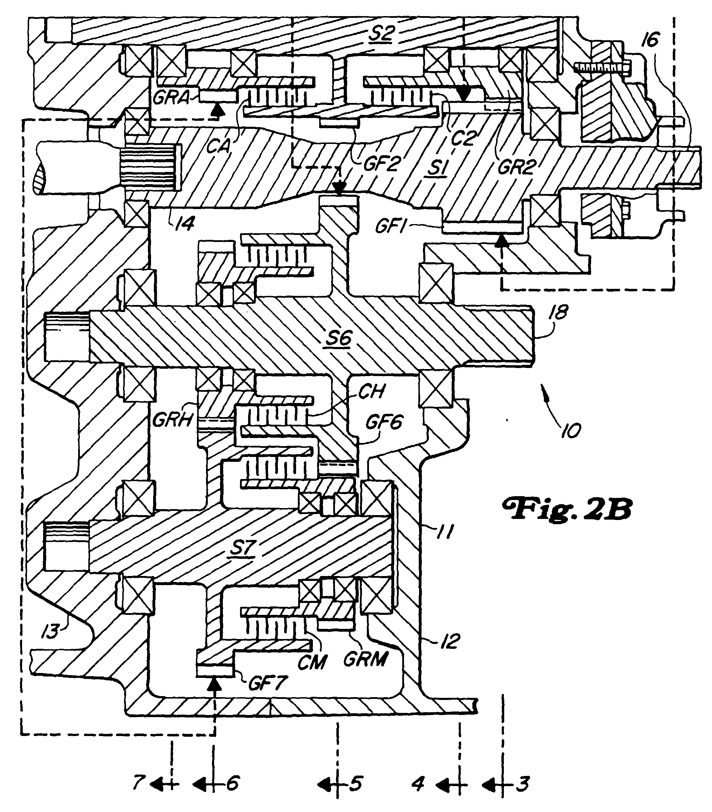

Fig. 2A und 2B zeigt ein Getriebe 10 mit einem Gehäuse 11, welches mehrere drehbare Wellen, Zahnräder, Kupplungen und Lagerungen trägt. Die Wellen sind zueinander parallel ausgerichtet und stützen sich an zwei Wandungen 12, 13 drehbar ab, welche miteinander derart verbunden sind, daß sie das Gehäuse 11 bilden.

Die Eingangswelle S1 ist drehbar in dem Gehäuse 11 gelagert und weist ein Eingangsende 14 auf, daß der Drehmomenteinleitung dient. Ein Eingangszahnrad GF1 ist drehfest mit der Eingangswelle S1 verbunden. Bei der bevorzugten Ausgestaltung ist das feste Eingangszahnrad GF1 integraler Bestandteil der Eingangswelle S1. Die Eingangswelle S1 weist ferner ein Zapfwellenende 16 auf, über das Zapfwellenleistung abgegeben wird. Sie läßt sich in bekannter Weise verwenden, um Leistung an verschiedene Anbaugeräte oder Zusatzgeräte abzugeben, die gemeinsam und in Verbindung mit dem Arbeitsfahrzeug, beispielsweise einem Traktor, verwendet werden.

Die Nebenwellen S2, S3, S4 und S5, die Ausgangswelle S6 und die Nebenwelle S7 sind drehbar im Gehäuse 11 gelagert. Auf diesen Wellen S2, S3, S4, S5, S6 und S7 sind entsprechende Festzahnräder GF2, GF3, GF4, GF5, GF6 und GF7 drehfest angeordnet, beispielsweise durch Verschweißen. Die Zahnräder GR1, GR2, GRR und GRA sind auf ihren zugehörigen Wellen S4, S2, S3 und S2 drehbar gelagert und lassen sich gegenüber diesen durch zugehörige Kupplungen C1, C2, CR und CA wahlweise festlegen. Die Zahnräder GRBA und GRBB sind auf ihrer zugehörigen Welle S3 drehbar gelagert und lassen sich gegenüber dieser durch eine zugehörige Kupplung CB wahlweise festlegen. Vorzugsweise sind die drehbaren Zahnräder GRBA und GRBB als Doppelzahnrad ausgebildet, wie es ist in Fig. 2 dargestellt ist. Die Zahnräder GRC, GRL, GRM und GRH sind auf ihren zugehörigen Wellen S4, S5, S7 und S6 drehbar gelagert und lassen sich gegenüber diesen durch zugehörige Kupplungen CC, CL, CM und CH wahlweise festlegen. Die Ausgangswelle S6 weist ein Ausgangsende 18 auf, durch das die Ausgangsleistung abgegeben wird.

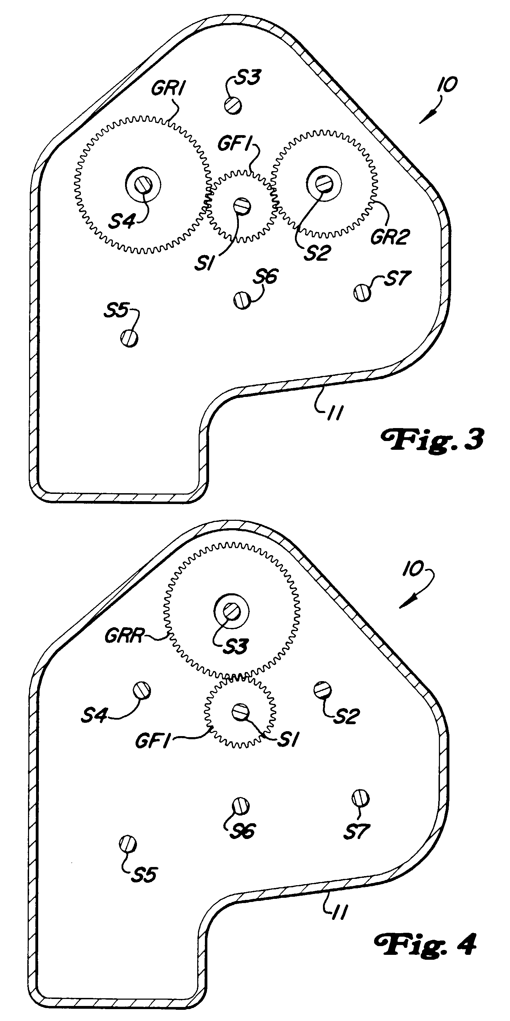

Wie aus den Figuren 3 bis 7 hervorgeht, ist die Eingangswelle S1 in etwa in der Mitte der näherungsweise kreis- oder bogenförmig angeordneten Neben- und Ausgangswellen S2, S3, S4, S5, S6 und S7 angeordnet, wobei die genannte Reihenfolge der Neben- und Ausgangswellen der Reihenfolge ihrer Anordnung entgegen dem Uhrzeigersinn entspricht, sofern mit S2 begonnen wird. Wie aus den Figuren 2 bis 4 hervorgeht, kämmt das Eingangszahnrad GF1 mit den drehbaren Zahnrädern GR1, GR2 und GRR, die einen Eingangssatz der drehbaren Zahnräder bilden.

Wie sich aus den Figuren 2, 3 und 4 ergibt, können die Kupplungen C1, C2 und CR wahlweise eines der drehbaren Zahnräder GR1, GR2, GRR des Eingangssatzes auf der zugehörigen Welle S4, S2 bzw. S3 festsetzen, um von dem Eingangszahnrad GF1 eine von der Eingangsleistung abgeleitete Drehzahl zu empfangen und eine Resultierende dieser Drehzahl an ausgewählte Übersetzungskombinationen der Zahnräder GF2, GF3, GF4, GF5, GF6, GF7, GRA, GRBA, GRBB, GRC, GRL, GRM und GRH zu übermitteln, um aus einer Anzahl von Gängen einen beliebigen Gang auszuwählen dem Ausgangsende 18 der Ausgangswelle S6 zuzuleiten. Die Übersetzungskombinationen sind unterschiedlich, entsprechend den Zahnrädern, die tatsächlich mit dem Antrieb oder antriebsmäßig verbunden sind.

Um die Übersetzungskombinationen zu bilden, sind die Zahnräder mit dem Antrieb verbunden. Eine solche Antriebsverbindung kann den unmittelbaren Zahneingriff zwischen Zahnrädern, die auf ihrer Welle festgelegt sind, oder die auf der Welle drehbar gelagert sind, einschließen, wobei eine oder mehrere der ihren zugeordneten Kupplungen betätigt oder nicht betätigt werden. Außerdem kann die Antriebsverbindung bei Aktivierung ihrer entsprechenden Kupplungen ein oder mehrere auf derselben Welle festgelegte Zahnräder oder auf derselben Welle drehbar gelagerte Zahnräder umfassen.

Das Getriebe 10 ist in einen Gang- oder Wechselgetriebeabschnitt und einen Gruppengetriebeabschnitt gegliedert. Die Wellen S2, S3, S4, die Zahnräder GF2, GF3, GF4, GR1, GR2, GRR, GRA, GRBA, GRBB, GRC und die Kupplungen C1, C2, CR, CA, CB, CC bilden den Wechselgetriebeabschnitt. Die Wellen S5, S6, S7, die Zahnräder GF5, GF6, GF7, GRL, GRM, GRH und die Kupplungen CL, CM, CH bilden den Gruppengetriebeabschnitt.

Wie aus den Fig. 2, 3 und 4 abgeleitet werden kann, empfängt der Wechselgetriebeabschnitt die Getriebeeingangsdrehzahl, indem die Kupplungen C1, C2, CR verwendet werden, um wahlweise eines ihrer zugehörigen drehbaren Zahnräder GR1, GR2, GRR des Eingangssatzes mit der zugehörigen Welle S4, S2, S3 drehfest zu verbinden. Immer wenn eine der Kupplungen C1, C2, CR aktiviert wird, um die von der Eingangsleistung abgeleitete Getriebeeingangsdrehzahl aufzunehmen, wird auch eine der Kupplungen CA, CB, CC aktiviert, um ein ausgewähltes Resultat eines Satzes von Wechselgetrieberesultaten der von der Eingangsleistung abgeleiteten Drehzahl über eines der Zahnräder GRA, GRC auf den Gruppengetriebeabschnitt zu übertragen. Dies erfolgt durch die Auswahl einer Kombination aus einem Satz einer Wechselgetriebe-Übersetzungskombination, die durch die Verwendung der Zahnräder GF2, GF3, GF4, GR1, GR2, GRR, GRA, GRBA, GRBB, GRC des Wechselgetriebeabschnitts gebildet werden, wie aus den Fig. 2, 6 und 7 abgeleitet werden kann.

Der Gruppengetriebeabschnitt empfängt die Wechselgetrieberesultate der von der Eingangsleistung abgeleiteten Drehzahl, indem eines der drehbaren Zahnräder GRA, GRC verwendet wird, um eine ausgewählten Gruppenübersetzungskombination der Zahnräder GF5, GF6, GF7, GRL, GRM, GRH des Gruppengetriebeabschnitts anzutreiben und die Ausgangsleistung bereitzustellen. Bei der bevorzugten Ausführung wird durch die Aktivierung der Kupplung CL ein unterer Drehzahlbereich für die Ausgangsleistung gewählt, so daß das Zahnrad GF5, welches antreibend mit dem Zahnrad GRL verbunden ist, das Wechselgetrieberesultat von dem Zahnrad GRC des Wechselgetriebeteils empfängt, wie es aus den Fig. 2, 5 und 7 hervorgeht. Ferner wird durch die Aktivierung einer der Kupplungen CM, CH ein entsprechender mittlerer oder oberer Drehzahlbereich für die Ausgangsleistung gewählt, so daß das Zahnrad GF7, welches antreibend mit festgesetzten der Zahnräder GRM, GRH verbunden ist, das Wechselgetrieberesultat von dem Zahnrad GRA des Wechselgetriebeabschnitts empfängt, wie es aus den Fig. 2, 5 und 6 hervorgeht.

Der untere Drehzahlbereich, der durch die Aktivierung der Kupplung CL gewählt wird, schließt die tiefsten Gänge für die Ausgangsleistung ein. Der obere Drehzahlbereich, der durch die Aktivierung der Kupplung CH gewählt wird, schließt die höchsten Gänge für die Ausgangsleistung ein. Der mittlere Drehzahlbereich, der durch die Aktivierung der Kupplung CM gewählt wird, überlappt den unteren und den oberen Drehzahlbereich. Insbesondere umfaßt der mittlere Drehzahlbereich wenigstens einen der Gänge für die Ausgangsleistung, der tiefer als wenigstens einer der Gänge des unteren Drehzahlbereichs ist, und wenigstens einen anderen der Gänge für die Ausgangsleistung der höher als wenigstens einer der Gänge des oberen Drehzahlbereichs ist. Wie weiter unten erläutert wird, liefert diese Überlappung des mittleren Drehzahlbereichs mit dem unteren und dem oberen Drezahlbereich der Bedienungsperson einen großen Anteil von Gängen im regulären Arbeitsbereich. Ferner kann die Bedienungsperson zwischen aufeinanderfolgenden Gängen umschalten, die in den verschiedenen Drehzahlbereichen auftreten, ohne eine vollständige Energieniveauänderung zwischen den verschiedenen Bereichen vorzunehmen.

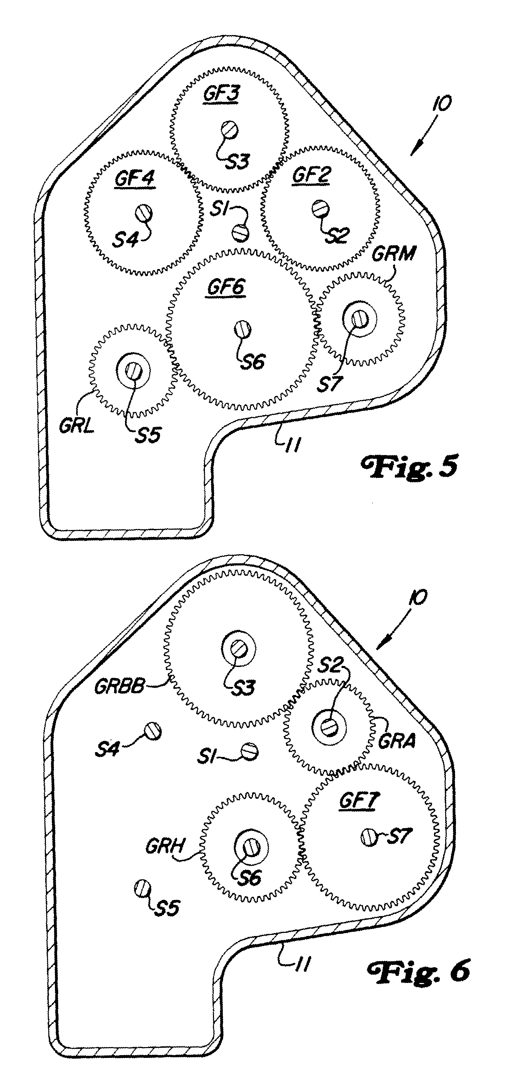

Die Übersetzungskombinationen der Gänge des Wechselgetriebeabschnitts und des Gruppengetriebeabschnitts hängen von dem vorgewählten Zahneingriff der Zahnräder, der wahlweisen Aktivierung der Kupplungen und der vorgewählten Zähnezahl jedes der Zahnräder ab. Wie die Figuren 2 bis 4 zeigen kämmt das Eingangszahnrad GF1 mit den drehbar gelagerten Zahnrädern GR1, GR2, GRR des Eingangssatzes. Wie aus den Figuren 2 und 5 hervorgeht, kämmt das Festzahnrad GF3 mit den Festzahnrädern GF2 und GF4. Wie die Figuren 2, 6 und 7 zeigen, sind die Zahnräder GRBA, GRBB als Doppelzahnräder ausgebildet, gemeinsam auf der Welle S3 drehbar gelagert und durch Aktivierung der Kupplung CB auf der Welle S3 festlegbar. Wie die Figuren 2 und 6 zeigen, kämmt das drehbare Zahnrad GRA mit dem drehbaren Zahnrad GRBB und dem Festzahnrad GF7, welches seinerseits mit dem drehbaren Zahnrad GRH kämmt. Wie die Figuren 2 und 5 zeigen, kämmt das Festzahnrad GF6 mit den drehbaren Zahnrädern GRL und GRM. Die Übersetzungen, die durch das Ineinandergreifen beliebiger Paarungen der Zahnräder GF1, GF2, GF3, GF4, GF5, GF6, GF7, GR1, GR2, GRR, GRA, GRBA, GRBB, GRC, GRL, GRM, GRH erhalten werden, hängen von den entsprechenden Zähnezahlen ab. In einer bevorzugten Ausgestaltung der Erfindung haben die in Fig. 2 gezeigten Zahnräder Zähnezahlen, wie sie aus der Tabelle 1 hervorgehen.

**Tabelle 1**

| Zahnrad | Zähnezahl | Zahnrad | Zähnezahl | Zahnrad | Zähnezahl |
|---|---|---|---|---|---|
| GF1 | 32 | GF7 | 65 | GRBB | 70 |
| GF2 | 71 | GR1 | 62 | GRC | 70 |
| GF3 | 71 | GR2 | 48 | GRL | 40 |
| GF4 | 71 | GRR | 62 | GRM | 40 |
| GF5 | 74 | GRA | 42 | GRH | 48 |
| GF6 | 72 | GRBA | 42 | | |

Es versteht sich für den Fachmann, daß man die gewünschten Getriebeausgangsdrehzahlen erhalten kann, durch wahlweises Kombinieren der Übersetzungen von antriebsmäßig miteinander verbundenen Paaren von Zahnrädern GF1, GF2, GF3, GF4, GF5, GF6, GF7, GR1, GR2, GRR, GRA, GRBA, GRBB, GRC, GRL, GRM, GRH. Ferner sind die Übersetzungsverhältnisse der antriebsmäßig verbundenen Zahnräder und die Position des Doppelzahnrades, welches aus den Zahnrädern GRBA und GRBB gebildet ist, entsprechend den Konstruktionsüberlegungen, die die von dem Hersteller, Verkäufer, Abnehmer und Bediener des Arbeitsfahrzeugs bevorzugten Drehzahlen widerspiegeln, abgebildet.

In der bevorzugten Ausgestaltung werden die Kupplungen C1, C2, CR, CA, CB, CC, CL, CM, CH entsprechend der Tabelle 2 wahlweise aktiviert, um die zugehörigen Zahnräder mit ihren zugehörigen Wellen zu verbinden, wobei die von der Eingangsleistung abgeleitete Drehzahl resultiert und als Ausgangsleistung abgegeben wird. Für den Fachmann versteht es sich, daß die in der Tabelle 2 angegebenen Werte Näherungswerte für Kilometer pro Stunde (approx. km/h) sind, die das Verständnis der Erfindung erleichtern, jedoch lediglich beispielhaft sind und sich entsprechend der Radgröße, der Achsuntersetzung und anderer Charakteristiken des Arbeitsfahrzeugs abändern lassen.

Wie aus den Tabellen 1 und 2 hervorgeht, stellt das Getriebe 10 achtzehn Vorwärtsgänge und neun Rückwärtsgänge zur Verfügung, wobei siebzehn Zahnräder und neun Kupplungen verwendet werden. Wie bereits erwähnt wurde, bilden sechs Kupplungen C1, C2, CR, CA, CB, CC den Wechselgetriebeabschnitt und drei Kupplungen CL, CM, CH den Gruppengetriebeabschnitt.

Das Übersetzungsverhältnis für jeden Gang entspricht der Drehzahl der Eingangswelle S1 relativ zur Drehzahl der Ausgangswelle S6. Ein negatives Übersetzungsverhältnis zeigt an, daß sich die Ausgangswelle S6 entgegengesetzt wie die Eingangswelle S1 dreht, wobei sein Wert dem eines der Vorwärtsgänge entspricht, wie aus der Tabelle 2 hervorgeht.

**TABELLE 2**

| | Gruppe | | | betätigte Kupplung | | | | | | | | | | |
|---|---|---|---|---|---|---|---|---|---|---|---|---|---|---|
| GANG | TIEF | MITTEL | HOCH | C1 | C2 | CR | CA | CB | CC | CL | CM | CH | Übersetzungsverhältnis | Appr. km/h |
| F1 | L | | | C1 | | | CA | | | CL | | | -10,241 | 2,4 |
| F2 | L | | | | C2 | | CA | | | CL | | | - 7,929 | 3,1 |
| F3 | L | | | C1 | | | | CB | | CL | | | - 6,145 | 4,0 |
| F4 | | M | | C1 | | | CA | | | | CM | | - 5,397 | 4,6 |
| F5 | L | | | | C2 | | | CB | | CL | | | - 4,757 | 5,2 |
| F6 | | M | | | C2 | | CA | | | | CM | | - 4,179 | 5,9 |
| F7 | L | | | C1 | | | | | CC | CL | | | - 3,687 | 6,7 |
| F8 | | M | | C1 | | | | CB | | | CM | | - 3,238 | 7,6 |
| F9 | L | | | | C2 | | | | CC | CL | | | - 2,854 | 8,7 |
| F10 | | M | | | C2 | | | CB | | | CM | | - 2,507 | 9,8 |
| F11 | | | H | C1 | | | CA | | | | | CH | - 2,214 | 11,1 |
| F12 | | M | | C1 | | | | | CC | | CM | | - 1,943 | 12,7 |
| F13 | | | H | | C2 | | CA | | | | | CH | - 1,714 | 14,4 |
| F14 | | M | | | C2 | | | | CC | | CM | | - 1,504 | 16,4 |
| F15 | | | H | C1 | | | | CB | | | | CH | - 1,329 | 18,6 |
| F16 | | | H | | C2 | | | CB | | | | CH | - 1,029 | 24,0 |
| F17 | | | H | C1 | | | | | CC | | | CH | - 0,797 | 31,0 |
| F18 | | | H | | C2 | | | | CC | | | CH | - 0,617 | 40,0 |
| R1 | L | | | | | CR | CA | | | CL | | | 10,241 | 2,4 |
| R2 | L | | | | | CR | | CB | | CL | | | 6,145 | 4,0 |
| R3 | | M | | | | CR | CA | | | | CM | | 5,397 | 4,6 |
| R4 | L | | | | | CR | | | CC | CL | | | 3,687 | 6,7 |
| R5 | | M | | | | CR | | CB | | | CM | | 3,238 | 7,6 |
| R6 | | | H | | | CR | CA | | | | | CH | 2,214 | 11,1 |
| R7 | | M | | | | CR | | | CC | | CM | | 1,943 | 12,7 |
| R8 | | | H | | | CR | | CB | | | | CH | 1,329 | 18,6 |
| R9 | | | H | | | CR | | | CC | | | CH | 0,797 | 31,0 |
| | | | | | | | | | | | | | | |

Ferner zeigt ein positives Übersetzungsverhältnis an, daß sich die Ausgangswelle S6 in derselben Richtung wie die Eingangswelle S1 dreht und einem der Rückwärtsgänge entspricht. Geht man beispielsweise davon aus, daß sich die Eingangswelle S1 immer gegen den Uhrzeigersinn dreht, so entspricht eine Drehung der Ausgangswelle im Uhrzeigersinn einem Vorwärtsgang und eine Drehung gegen den Uhrzeigersinn einem Rückwärtsgang.

Wie die Tabelle 2 zeigt, stellt die Erfindung einen großen Anteil von Vorwärtsgängen, nämlich die Vorwärtsgänge F5, F6, F7, F8, F9, F10, Fll, F12, F13, bereit, die im regulären Arbeitsbereich von ungefähr 5 bis 15 km/h liegen. Dies hat seine Ursache in der Überlappung des mittleren Drehzahlbereichs mit dem unteren und dem oberen Drehzahlbereich. Der reguläre Arbeitsbereich enthält die Vorwärtsgänge F5, F7, F9 des unteren Drehzahlbereichs, die Vorwärtsgänge F6, F8, F10, F12 des mittleren Drehzahlbereichs und die Vorwärtsgänge F11, F13 des oberen Drehzahlbereichs.

In der bevorzugten Ausgestaltung sind die Vorwärtsgänge F4, F6, F8 des mittleren Drehzahlbereichs mit den Vorwärtsgängen F5, F7, F9 des unteren Drehzahlbereichs versetzt, daß heißt sie folgen aufeinander in abwechselnder Reihenfolge. Ferner sind die Vorwärtsgänge F12, F14 des mittleren Drehzahlbereichs mit den Vorwärtsgängen F11, F13 des oberen Drehzahlbereichs versetzt. Daher kann die Bedienungsperson des Arbeitsfahrzeugs zwischen den Bereichen der Vorwärtsgänge umschalten, ohne daß ein kompletter Wechsel der Energieniveaus zwischen den verschiedenen Bereichen durchgemacht werden muß. Beispielsweise kann die Bedienungsperson unmittelbar von dem Vorwärtsgang F3 des unteren Drehzahlbereich in den Vorwärtsgang F4 des mittleren Drehzahlbereichs umschalten, ohne daß zunächst eine vollständige Umwandlung zwischen den Energieniveaus des unteren und des mittleren Drehzahlbereichs durchgeführt werden muß.

Durch eine Betätigung der Kupplungen wird die Drehzahl der sich drehenden Komponenten gesteuert. Überdies legt die Differenz zwischen den Drehzahlen der sich drehenden Komponenten die Energieniveauänderung fest, die sich bei einer Umschaltung zwischen den Vorwärts- oder den Rückwärtsgängen ergibt. Wie aus Tabelle 2 hervorgeht, wird durch eine Betätigung der Kupplungen C1, CB, CL die Drehzahl der sich drehenden Komponenten für den Vorwärtsgang F3 des unteren Drehzahlbereichs festgelegt. Ferner legt eine Betätigung der Kupplungen C1, CA, CM die Drehzahl der sich drehenden Komponenten für den Vorwärtsgang F4 des mittleren Drehzahlbereichs fest. Eine Gruppenumschaltung zwischen den Vorwärtsgängen F3 und F4 führt zu einer kleinen Energieniveauänderung an den sich drehenden Komponenten, weil sich der untere und der mittlere Drehzahlbereich überlappen. Ferner führen Gruppenumschaltungen in dem Getriebe 10 zwischen aufeinanderfolgenden Gängen zu einer kleinen Energieniveauänderung an den sich drehenden Wellen, Zahnräder, Kupplungen und Lager, weil sich der untere, der mittlere und der obere Drehzahlbereich überlappen.

Wunschgemäß erfährt das Arbeitsfahrzeug eine weichere Bereichsumschaltung, indem eine kleinere Energieniveauänderung an den sich drehenden Komponenten erfolgt. Daher ist die Bereichsumschaltung zwischen den Gängen F3 und F4 weich. Die Bereichsumschaltung zwischen anderen aufeinanderfolgenden Gängen von verschiedenen Bereichen ist ebenfalls weich. Darüber hinaus führt eine Verringerung der Energieniveauänderung bei Gruppenumschaltungen zu einer Verringerung der erforderlichen Schaltzeiten.

Zusätzlich ist der Rückwärtsgang R3 des mittleren Drehzahlbereichs mit dem Rückwärtsgang R4 des unteren Drehzahlbereichs versetzt. Ferner ist der Rückwärtsgang R7 des mittleren Drehzahlbereichs mit dem Rückwärtsgang R6 des oberen Drehzahlbereichs versetzt. Ähnlich wie bei den Gruppenumschaltungen zwischen den aufeinanderfolgenden Vorwärtsgängen, wie oben beschrieben, kann die Bedienungsperson eine Gruppenumschaltung zwischen aufeinanderfolgenden Rückwärtsgängen ausführen, ohne daß eine vollständige Energieniveauänderung zwischen den verschiedenen Gruppen ausgeführt werden muß.

Eine Übersetzungssequenz wird durch antriebsmäßige Verbindung einer Vielzahl von Zahnräder gebildet. Die Übersetzungssequenz wird in wenigstens einer der Übersetzungskombinationen verwendet, um eine Reduktion oder Verminderung der an die Übersetzungssequenz übertragenen Drehzahl bereitzustellen, und sie wird in wenigstens einer anderen Übersetzungskombination verwendet, um eine Erhöhung der an die Übersetzungssequenz übertragenen Drehzahl bereitzustellen. Bei der bevorzugten Ausgestaltung sind die drehbaren Zahnräder GRA, GRBB, GRBA, GRC antriebsmäßig verbunden, um eine Übersetzungssequenz zu bilden, die alternativ vor oder zurück durchfahren wird, um die erwünschte Verringerung oder Erhöhung der Drehzahl für die Übersetzungskombination der Vorwärtsgänge F1, F2, F12, F14, F17, F18 und der Rückwärtsgänge R1, R7, R9 zu liefern, wie es aus den Figuren 2 bis 7 und der Tabelle 2 hervorgeht.

Einerseits werden durch Aktivierung der Kupplungen CA, CL die drehbaren Zahnräder GRA, GRBB, GRBA, GRC treibend verbunden, um eine Übersetzungssequenz zu bilden, die die gewünschte Herabsetzung der an diese Übersetzungssequenz übertragenen Drehzahl für die Übersetzungskombinationen der Gänge F1, F2, R1 liefert. Die auf der Zähnezahl der drehbaren Zahnräder GRA, GRBB, GRBA, GRC basierende Größe dieser Übersetzungssequenz ist für die Drehzahlherabsetzung vorzugsweise (70/42)(70/42), wie aus der Tabelle 1 hervorgeht.

Andererseits werden durch Aktivierung der Kupplungen CC, CM oder der Kupplungen CC, CH die drehbaren Zahnräder GRA, GRBB, GRBA, GRC in der umgekehrten Richtung, nämlich GRC, GRBA, GRBB, GRA antreibend verbunden, um eine entgegengesetzte Übersetzungssequenz zu bilden. Diese Übersetzungssequenz der drehbaren Zahnräder GRC, GRBA, GRBB, GRA wird verwendet, um die gewünschte Erhöhung der an diese Übersetzungssequenz übertragenen Drehzahl für die Übersetzungskombinationen der Gänge F12, F14, F17, F18, R7, R9 zu liefern. Die auf der Zähnezahl der drehbaren Zahnräder GRC, GRBA, GRBB, GRA basierende Größe dieser Übersetzungssequenz ist für die Erhöhung der Drehzahl vorzugsweise (42/70)(42/70), wie aus der Tabelle 1 hervorgeht.

Indem die drehbaren Zahnräder GRA, GRBB, GRBA, GRC sowohl für die gewünschte Herabsetzung der Gänge F1, F2, R1 als auch für die gewünschte Erhöhung der Gänge F12, F14, F17, F18, R7, R9 verwendet werden, kann die Anzahl der Zahnräder, die erforderlich ist, um die Gänge für die Ausgangsleistung bereitzustellen, verringert werden. Darüber hinaus ist weniger Material für den Getriebezusammenbau erforderlich, da weniger Zahnräder verwendet werden. Zusätzlich drehen sich weniger Zahnräder im Getriebe 10, so daß sich weniger kinetische Energie aufbaut und die Energieänderung der Komponenten während des Schaltens verringert wird. Ferner ergibt sich wegen dieser Abnahme der Energieniveauänderung der sich drehenden Wellen, Zahnräder, Kupplungen und Lager eine geringere erforderliche Zeit für Gruppenumschaltungen und eine Zunahme der Weichheit dieser Umschaltungen.

Die doppelte Verwendung der sich drehenden Zahnräder GRA, GRBB, GRBA, GRC hat nicht nur die Verringerung der Gesamtzahl der erforderlichen Zahnräder zur Folge, sondern erlaubt auch die drehbare Lagerung der Wellen S1, S2, S3, S4, S5, S6, S7, die alle Zahnräder des Getriebes 10 tragen, in den beiden gegenüberliegenden Wandungen 12, 13, die zusammengefügt sind, um das Gehäuse 11 zu bilden. Durch die doppelte Verwendung der Zahnräder GRA, GRBB, GRBA, GRC ist es möglich, daß die Wellen S1, S2, S3, S4, S5, S6, S7 in dem Getriebe 10 innerhalb des Kanals oder des Volumens, das durch die Wandungen 12, 13 gebildet wird, parallel zueinander ausgerichtet sind. Daher steigert die doppelte Verwendung der sich drehenden Zahnräder GRA, GRBB, GRBA, GRC die Kompaktheit des Getriebes 10 und verringert den für das Getriebe 10 erforderlichen Bauraum in einem Arbeitsfahrzeug.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann durch eine entsprechende Anordnung der Wellen, Zahnräder und Kupplungen der Gruppengetriebeabschnitt dem Wechselgetriebeabschnitt vorgelagert sein, derart daß der Gruppengetriebeabschnitt die Eingangsleistung empfängt, der Wechselgetriebeabschnitt das von dem Gruppengetriebeabschnitt bereitgestellte Resultat der Eingangsleistung empfängt und der Wechselgetriebeabschnitt die Ausgangsleistung abgibt. Zusätzlich können wenigstens ein Gang des oberen Drehzahlbereichs der Ausgangsleistung mit wenigstens einem Gang des unteren Drehzahlbereichs der Ausgangsleistung miteinander abwechseln. Ferner kann die Verschachtelung (das Abwechseln) des mittleren Drehzahlbereichs der Ausgangsleistung mit dem oberen oder unteren Drehzahlbereich der Ausgangsleistung jede Einstreuungsauswahl für die Gänge mit verschiedenem Übereinstimmungsgrad und verschiedener Symmetrie einschließen. Darüber hinaus kann man die Übersetzungen so vorauswählen, das jeder der unteren, mittleren und oberen Drehzahlbereiche durch Aktivierung einer der Kupplungen CL, CM, CH gewählt werden kann. Auch kann man sowohl die vorgewählten Übersetzungen der treibend verbundenen Zahnräder als auch die Lage des Doppelzahnrades, das durch die Zahnräder GRBA, GRBB gebildet ist, variieren.

## Patentansprüche

1. Getriebe mit einem Gehäuse (11), mit einer in dem Gehäuse (11) drehbar gelagerten Eingangswelle (S1), die zur Leistungsaufnahme ein Eingangsteil (14) aufweist und auf der ein Eingangszahnrad (GF1) drehfest angeordnet ist, mit einer in dem Gehäuse (11) drehbar gelagerten Ausgangswelle (S6), die zur Leistungsabgabe ein Ausgangsteil (18) aufweist, und mit mehreren in dem Gehäuse (11) drehbar gelagerten Nebenwellen (S2, S3, S4, S5, S7), wobei auf der Ausgangswelle (S6) und den Nebenwellen (S2, S3, S4, S5, S7) je wenigstens ein Festzahnrad (GF2, GF3, GF4, GF5, GF6, GF7) drehfest angeordnet und je wenigstens ein durch eine zugehörige Kupplung (C1, C2, CR, CA, CB, CC, CH, CM, CL) auf der entsprechenden Welle wahlweise festsetzbares Zahnrad (GR1, GR2, GRR, GRA, GRBB, GRBA, GRC, GRH, GRM, GRL) drehbar gelagert ist, wobei die Wellen, Zahnräder und Kupplungen so ausgelegt und angeordnet sind, daß sich durch wahlweises antriebsmäßiges Verbinden dieser Komponenten unterschiedliche Übersetzungskombinationen und damit unterschiedliche Ausgangsdrehzahlen einstellen lassen, gekennzeichnet durch mehrere drehbar gelagerte Zahnräder (GRA, GRBB, GRBA, GRC), die antriebsmäßig verbunden sind, um eine Übersetzungssequenz zu bilden, welche einerseits in wenigstens einer der Übersetzungskombinationen enthalten ist, um die an sie übertragene Drehzahl abzusenken, und welche andererseits in wenigstens einer anderen Übersetzungskombination enthalten ist, um die an sie übertragene Drehzahl zu steigern.

2. Getriebe nach Anspruch 1, dadurch gekennzeichnet, daß wenigstens eine Nebenwelle (S2, S3, S4) einem Wechselgetriebeabschnitt und wenigstens eine andere Nebenwelle (S5, S7) und/oder die Ausgangswelle (S6) einem Gruppengetriebeabschnitt zugeordnet sind.

3. Getriebe nach Anspruch 1 oder 2, dadurch gekennzeichnet, daß die drehbaren Zahnräder einen Eingangssatz von Zahnrädern (GR1, GR2, GRR), die mit dem Eingangszahnrad (GF1) kämmen, enthalten, daß die Wellen, Zahnräder und Kupplungen angeordnet sind, um ein beliebig ausgewähltes drehbares Zahnrad (GR1, GR2, GRR) des Eingangssatzes durch seine zugehörige Kupplung (C1, C2, CR) auf seiner Welle (S4, S2, S3) festzusetzen und antriebsmäßig einer Übersetzungskombination zuzuschalten, die beliebig aus einem Satz von Übersetzungskombinationen auswählbar ist, und wobei die Übersetzungskombinationen durch Verwendung mehrerer der Zahnräder gebildet werden, um mehrere Drehzahlstufen am Ausgangsteil (18) der Ausgangswelle (S6) bereitzustellen.

4. Getriebe nach einem der Ansprüche 1 bis 3, dadurch gekennzeichnet, daß die Übersetzungssequenz mehrere drehbar gelagerte, miteinander in Eingriff stehende Zahnräder (GRA, GRBB, GRBA, GRC) einschließt.

5. Getriebe nach einem der Ansprüche 1 oder 4, dadurch gekennzeichnet, daß auf den Wellen (S2, S4, S3) wenigstens vier Zahnräder drehbar gelagert sind und daß die Übersetzungssequenz wenigstens vier dieser Zahnräder (GRA, GRBB, GRBA, GRC) einschließt.

6. Getriebe nach einem der Ansprüche 1 bis 5, dadurch gekennzeichnet, daß die Übersetzungssequenz zwei Paare miteinander in Eingriff stehender drehbarer Zahnräder (GRA, GRBB; GRBA, GRC) enthält und daß jeweils ein Zahnrad (GRBB, GRBA) jedes Paares auf derselben Welle (S3) drehbar gelagert ist.

7. Getriebe nach Anspruch 6, dadurch gekennzeichnet, daß jedes der auf derselben Welle (S3) drehbar gelagerten Zahnräder (GRBB, GRBA) auf dieser durch dieselbe Kupplung (CB) wahlweise festlegbar ist.

8. Getriebe nach einem der Ansprüche 1 bis 7, dadurch gekennzeichnet, daß zwei der drehbaren Zahnräder (GRBB, GRBA) der Übersetzungssequenz als Doppelzahnrad ausgebildet sind.

9. Getriebe nach einem der Ansprüche 1 bis 8, dadurch gekennzeichnet, daß das Getriebe an seiner Ausgangswelle (S6) jeweils mehrere Drehzahlstufen für beide Drehrichtungen bereitstellt.

10. Getriebe nach einem der Ansprüche 1 bis 9, dadurch gekennzeichnet, daß ein Wechselgetriebeabschnitt, welcher wenigstens eine in dem Gehäuse (11) drehbar gelagerte Wechselgetriebenebenwelle (S2, S3, S4) aufweist, sowie ein Gruppengetriebeabschnitt, welcher wenigstens eine in dem Gehäuse (11) drehbar gelagerte Gruppengetriebenebenwelle (S5, S7) aufweist, vorgesehen sind, wobei die Wellen, Zahnräder und Kupplungen so ausgelegt und angeordnet sind, daß sich durch wahlweises antriebsmäßiges Verbinden dieser Komponenten unterschiedliche Wechselgetriebeübersetzungsverhältnisse und damit unterschiedliche Drehzahlen jeweils innerhalb einer tiefen, mittleren und hohen durch den Gruppengetriebeabschnitt einstellbaren Drehzahlgruppe einstellen lassen, und daß
die tiefe Drehzahlgruppe die tiefste Getriebausgangsdrehzahl einschließt,
die hohe Drehzahlgruppe die höchste Getriebeausgangsdrehzahl einschließt und
die mittlere Drehzahlgruppe wenigstens eine Getriebeausgangsdrehzahl umfaßt, die tiefer liegt als wenigstens eine Getriebeausgangsdrehzahl der tiefsten Drehzahlgruppe, sowie wenigstens eine Getriebeausgangsdrehzahl umfaßt, die höher liegt als wenigstens eine Getriebeausgangsdrehzahl der höchsten Drehzahlgruppe.

11. Getriebe nach Anspruch 10, dadurch gekennzeichnet, daß die drehbaren Zahnräder einen Eingangssatz von Zahnrädern (GR1, GR2, GRR), die mit dem Eingangszahnrad (GF1) kämmen, enthalten, daß die Wellen, Zahnräder und Kupplungen des Wechselgetriebeabschnitts angeordnet sind, um ein beliebig ausgewähltes drehbares Zahnrad (GR1, GR2, GRR) des Eingangssatzes durch seine zugehörige Kupplung (C1, C2, CR) auf seiner Welle (S4, S2, S3) festzusetzen und antriebsmäßig einer Wechselgetriebe-Übersetzungskombination zuzuschalten, die beliebig aus einem Satz von Übersetzungskombinationen auswählbar ist, und wobei die Wechselgetriebe-Übersetzungskombinationen durch Verwendung mehrerer der Zahnräder gebildet werden, um mehrere Wechselgetrieberesultate bereitzustellen.

12. Getriebe nach Anspruch 10 oder 11, dadurch gekennzeichnet, daß der Gruppengetriebeabschnitt ausgelegt ist, um Wechselgetrieberesultate aufzunehmen und antriebsmäßig einer Gruppengetriebe-Übersetzungskombination zuzuschalten, die beliebig aus einem Satz von Übersetzungskombinationen auswählbar ist, wobei die Gruppengetriebe-Übersetzungskombinationen durch Verwendung mehrerer Zahnräder des Grupppengetriebeabschnitts gebildet werden, um wenigstens sechs Drehzahlstufen am Ausgangsteil (18) der Ausgangswelle (S6) bereitzustellen, gekennzeichnet durch
einen unteren Drehzahlbereich für die Leistungsabgabe, der durch ein auf der ersten Gruppengetriebenebenwelle (S5) drehbar gelagertes Zahnrad (GRL) dargestellt wird, welches wahlweise durch eine zugehörige Kupplung (CL) auf der Welle (S5) festsetzbar ist, um seine Gruppengetriebe-Übersetzungskombination zu bilden, wobei der untere Drehzahlbereich die untersten Drehzahlstufen für die Leistungsabgabe einschließt,
einen oberen Drehzahlbereich für die Leistungsabgabe, der durch wenigstens ein auf der Ausgangswelle (S6) drehbar gelagertes Zahnrad (GRH) dargestellt wird, welches wahlweise durch eine zugehörige Kupplung (CH) auf der Ausgangswelle (S6) festsetzbar ist, um seine Gruppengetriebe-Übersetzungskombination zu bilden, wobei der obere Drehzahlbereich die obersten Drehzahlstufen für die Leistungsabgabe einschließt, und
einen mittleren Drehzahlbereich für die Leistungsabgabe, der durch wenigstens ein auf der zweiten Gruppengetriebenebenwelle (S7) drehbar gelagertes Zahnrad (GRM) dargestellt wird, welches wahlweise durch eine zugehörige Kupplung (CM) auf der Welle (S7) festsetzbar ist, um seine Gruppengetriebe-Übersetzungskombination zu bilden, wobei der mittlere Drehzahlbereich wenigstens eine der Drehzahlstufen für die Leistungsabgabe enthält, die unter wenigstens einer der Drehzahlstufen des unteren Drehzahlbereichs liegt, und wenigstens eine andere der Drehzahlstufen für die Leistungsabgabe enthält, die über wenigstens einer der Drehzahlstufen des oberen Drehzahlbereichs liegt.

13. Getriebe nach Anspruch 11 oder 12, dadurch gekennzeichnet, daß der Eingangssatz der drehbaren Zahnräder jeweils wenigstens eines der Zahnräder (GR1, GR2, GRR) einschließt, die drehbar auf jeder der Wechselgetriebe-Nebenwellen (S2, S3, S4) gelagert sind.

14. Getriebe nach einem der Ansprüche 10 bis 13, gekennzeichnet durch wenigstens drei Wechselgetriebe-Nebenwellen (S2, S3, S4).

15. Getriebe nach einem der Ansprüche 10 bis 14, dadurch gekennzeichnet, daß mehrere Zahnräder (GR2, GRA; GR3, GRBB, BRBA; GR4, GR1, GRC) drehbar auf jeder Wechselgetriebe-Nebenwelle (S2, S3, S4) gelagert und wahlweise durch eine entsprechende von mehreren Kupplungen (C2, CA; C3, CB; C4, CC) festlegbar sind.

16. Getriebe nach einem der Ansprüche 10 bis 15, dadurch gekennzeichnet,
daß die Drehzahlstufen für die Leistungsabgabe wenigstens zwölf im Uhrzeigersinn drehende Gänge umfassen,
daß der mittlere und der untere Drehzahlbereich jeder wenigstens drei im Uhrzeigersinn drehende Gänge enthalten, die ineinander verschachtelt sind, und
daß der mittlere Drehzahlbereich wenigstens zwei weitere im Uhrzeigersinn drehende Gänge enthält, die mit zwei im Uhrzeigersinn drehenden Gängen des oberen Drehzahlbereichs ineinander verschachtelt sind.

17. Getriebe nach einem der Ansprüche 10 bis 16, dadurch gekennzeichnet,
daß die Drehzahlstufen für die Leistungsabgabe wenigstens sechs gegen den Uhrzeigersinn drehende Gänge umfassen,
daß der mittlere Drehzahlbereich wenigstens einen gegen den Uhrzeigersinn drehenden Gang enthält, der mit wenigstens einem gegen den Uhrzeigersinn drehenden Gang des unteren Drehzahlbereichs ineinander verschachtelt sind, und
daß der mittlere Drehzahlbereich wenigstens einen weiteren gegen den Uhrzeigersinn drehenden Gang enthält, der mit wenigstens einem gegen den Uhrzeigersinn drehenden Gang des oberen Drehzahlbereichs ineinander verschachtelt ist.

18. Getriebe nach einem der Ansprüche 10 bis 17, dadurch gekennzeichnet, daß die Drehzahlstufen für die Leistungsabgabe wenigstens achtzehn im Uhrzeigersinn drehende Gänge und wenigstens neun gegen den Uhrzeigersinn drehende Gänge umfassen.

19. Getriebe nach einem der Ansprüche 1 bis 18, dadurch gekennzeichnet, daß die Eingangswelle (S1) ein Abtriebsende (16) für einen Abtrieb, beispielsweise einen Zapfwellenabtrieb, aufweist.

20. Verfahren zur Bereitstellung mehrerer Gänge an dem Ausgangsende (18) einer drehbaren Ausgangswelle (S6) unter Verwendung einer drehbaren Eingangswelle (S1), die zur Leistungsaufnahme ein Eingangsteil (14) aufweist und auf der ein Eingangszahnrad (GF1) drehfest angeordnet ist, und mehrerer drehbarer Nebenwellen (S2, S3, S4, S5, S7), wobei auf der Ausgangswelle (S6) und den Nebenwellen (S2, S3, S4, S5, S7) je wenigstens ein Festzahnrad (GF2, GF3, GF4, GF5, GF6, GF7) drehfest angeordnet und je wenigstens ein wahlweise festsetzbares Zahnrad (GR1, GR2, GRR, GRA, GRBB, GRBA, GRC, GRH, GRM, GRL) drehbar gelagert ist, wobei die drehbaren Zahnräder einen Eingangssatz enthalten, der mit dem Eingangszahnrad (GF1) im Eingriff steht, und wobei die Wellen und Zahnräder angeordnet sind, um ein beliebig ausgewähltes drehbares Zahnrad (GR1, GR2, GRR) des Eingangssatzes auf seiner Welle (S4, S2, S3) festzusetzen und antriebsmäßig einer Übersetzungskombination zuzuschalten, die beliebig aus einem Satz von Übersetzungskombinationen auswählbar ist, wobei die Übersetzungskombinationen durch Verwendung mehrerer Zahnräder gebildet werden, gekennzeichnet durch den Verfahrensschritt:
mehrere drehbar gelagerte Zahnräder (GRA, GRBB, GRBA, GRC) werden antriebsmäßig zugeschaltet, um eine Übersetzungssequenz zu bilden, welche einerseits in wenigstens einer der Übersetzungskombinationen enthalten ist, um die an sie übertragene Drehzahl abzusenken, und welche andererseits in wenigstens einer anderen Übersetzungskombinationen enthalten ist, um die an sie übertragene Drehzahl zu erhöhen.

21. Verfahren nach Anspruch 20, wobei die Drehzahlstufen für die Leistungsabgabe wenigstens sechs Gänge umfassen, die in einem unteren Drehzahlbereich, welcher die untersten der Gänge umfaßt, einem oberen Drehzahlbereich, welcher die obersten der Gänge umfaßt, und einem mittleren Drehzahlbereich angeordnet sind, gekennzeichnet durch die Verfahrensschritte:
verschachteltes Anordnen wenigstens eines Ganges des mittleren Drehzahlbereichs mit wenigstens einem Gang des unteren Drehzahlbereichs und
verschachteltes Anordnen wenigstens eines anderen Ganges des mittleren Drehzahlbereichs mit wenigstens einem Gang des oberen Drehzahlbereichs.

22. Verfahren nach Anspruch 21, bei dem die Drehzahlstufen für die Leistungsabgabe wenigstens zwölf im Uhrzeigersinn drehende Gänge umfassen, mit den weiteren Verfahrensschritten,
verschachteltes Anordnen wenigstens drei im Uhrzeigersinn drehender Gänge des mittleren Drehzahlbereichs mit Bezug auf wenigstens drei im Uhrzeigersinn drehende Gänge des unteren Drehzahlbereichs und
verschachteltes Anordnen zweier weiterer im Uhrzeigersinn drehender Gänge des mittleren Drehzahlbereichs mit Bezug auf wenigstens zwei im Uhrzeigersinn drehende Gänge des oberen Drehzahlbereichs.

23. Verfahren nach Anspruch 21 oder 22 bei dem die Drehzahlstufen für die Leistungsabgabe wenigstens sechs gegen den Uhrzeigersinn drehende Gänge umfassen, mit den weiteren Verfahrensschritten,
verschachteltes Anordnen wenigstens eines gegen den Uhrzeigersinn drehenden Ganges des mittleren Drehzahlbereichs mit wenigstens einem gegen den Uhrzeigersinn drehenden Gang des unteren Drehzahlbereichs und
verschachteltes Anordnen wenigstens eines weiteren gegen den Uhrzeigersinn drehenden Ganges des mittleren Drehzahlbereichs mit wenigstens einem gegen den Uhrzeigersinn drehenden Gang des oberen Drehzahlbereichs.

## Claims

1. A gearbox with a housing (11), an input shaft (S1) which is rotatably mounted in the housing (11) and comprises an input part (14) for receiving power and on which an input gearwheel (GF1) is arranged rotationally fast, an output shaft (S6) which is mounted rotatably in the housing (11) and comprises an output part (18) for delivering power, and a plurality of countershafts (S2, S3, S4, S5, S7) rotatably mounted in the housing (11), wherein at least one fixed gearwheel each (GF2, GF3, GF4, GF5, GF6, GF7) is arranged rotationally fast on each of the output and countershafts (S6 and S2, S3, S4, S5, S7) and at least one gearwheel each (GRI, GR2, GRR, GRA, GRBB, GRBA, GRC, GRH, GRM, GRL) is mounted rotatably and can be selectively locked on the corresponding shaft by an associated clutch (C1, C2, CR, CA, CB, CC, CH, CM, CL), wherein the shafts, gearwheels and clutches are so designed and arranged that different gear ratio combinations and thus different output speeds can be set up by selective driving connection of these components, characterized by a plurality of rotatably mounted gearwheels (GRA, GRBB, GRBA, GRC) which are drivably connected in order to form a gear ratio sequence which is included on the one hand in one of the gear ratio combinations, in order to reduce the speed transmitted thereto, and which on the other hand is included in at least one other gear ratio combination in order to increase the speed transmitted thereto.

2. A gearbox according to claim 1, characterized in that at least one countershaft (S2, S3, S4) is associated with a change-speed gearbox section and at least one other countershaft (S5, S7) and/or output shaft (S6) is associated with a range gear section.

3. A gearbox according to claim 1 or 2, characterized in that the rotatable gearwheels include an input set of gearwheels (GR1, GR2, GRR), which mesh with the input gearwheel (GF1), in that the shafts, gearwheels and clutches are arranged so as to lock on to its shaft (S4, S2, S3) an arbitrarily selected rotatable gearwheel (GR1, GR2, GRR) of the input set, through its associated clutch (C1, C2, CR), and switch into drive a gear ratio combination which can be selected arbitrarily from a set of gear ratio combinations, and wherein the gear ratio combinations are formed by use of a plurality of the gearwheels, in order to make available a plurality of speed steps at the output part (18) of the output shaft (S6).

4. A gearbox according to any of claims 1 to 3, characterized in that the gear ratio sequence includes a plurality of rotatably mounted gearwheels (GRA, GRBB, GRBA, GRC) staying in engagement with one another.

5. A gearbox according to any of claims 1 to 4, characterized in that at least four gearwheels are rotatably mounted in the shafts (S2, S4, S3) and in that the gear ratio sequence includes at least four of these gearwheels (GRA, GRBB, GRBA, GRC).

6. A gearbox according to any of claims 1 to 5, characterized in that the gear ratio sequence includes two pairs of rotatable gearwheels (GRA, GRBB; GRBA, GRC) staying in engagement with one another and in that one gearwheel each (GRBB, GRBA) of each pair is rotatably mounted on the same shaft (S3).

7. A gearbox according to claim 6, characterized in that each gearwheel (GRBB, GRBA) rotatably mounted on the same shaft (S3) can be selectively locked thereon by the same clutch (CB).

8. A gearbox according to any of claims 1 to 7, characterized in that two of the rotatable gearwheels (GRBB, GRBA) of the gear ratio sequence are formed as a double gearwheel.

9. A gearbox according to any of claims 1 to 8, characterized in that the gearbox makes available a plurality of speed steps at its output shaft (S6) for both directions of rotation.

10. A gearbox according to any of claims I to 9, characterized in that a change-speed gear section, which comprises at least one change-speed gear countershaft (S2, S3, S4) rotatably mounted in the housing (11), and a range gear section, which comprises at least one range gear countershaft (S5, S7) rotatably mounted in the housing (11), are provided, wherein the shafts, gearwheels and clutches are so designed and arranged that different change-speed gear ratios and thus different speeds can be set by selective driving connection of these components within each of a low, middle and high speed range which can be set by the range gear section, and in that
the low speed range includes the lowest gearbox output speed,
the high speed range includes the highest gearbox output speed and
the middle range includes at least one gearbox output speed which lies lower than at least one gearbox output speed of the lowest speed range, as well as at least one gearbox output speed which lies above at least one gearbox output speed of the highest speed range.

11. A gearbox according to claim 10, characterized in that the rotatable gearwheels include an input set of gearwheels (GR1, GR2, GRR) which mesh with the input gearwheel (GF1), in that the shafts, gearwheels and clutches of the change-speed gear section are arranged so that an arbitrarily selected rotatable gearwheel (GR1, GR2, GRR) of the input set can be locked by its associated clutch (C1, C2, CR) to its shaft (S4, S2, S3) and switch into drive a change-speed gear combination which can be selected arbitrarily from a set of gear ratio combinations, and wherein the change-speed gear ratio combinations are formed by use of a plurality of the gearwheels, in order to make available several change-speed gear results.

12. A gearbox according to claim 10 or 11, characterized in that the range gear section is designed to accept change-speed gear results and to switch into drive a range gear ratio combination which can be selected arbitrarily from a set of gear ratio combinations, wherein the range gear ratio combinations are formed by using a plurality of gearwheels of the range gear section, in order to make available at least six speed steps at the output part (18) of the output shaft (S6), characterized by
a lower speed range for the power delivery which is represented by a gearwheel (GRL) which is rotatably mounted on the first range gear countershaft (S5) and can be selectively locked on the shaft (S5) by a corresponding clutch (CL), in order to form its range gear ratio combination, wherein the lower speed range includes the lowest speed step for the power delivery,
an upper speed range for power delivery which is represented by at least one gearwheel (GRH) which is rotatably mounted on the output shaft (S6) and can be selectively locked on the output shaft (S6) by a corresponding clutch (CH), in order to form its range gear ratio combination, wherein the upper speed range includes the highest speed step for the power delivery, and
a middle speed range for the power delivery, which is represented by at least one gearwheel (GRM) which is rotatably mounted on the second range gear countershaft (S7) and can be selectively locked on the shaft (S7) by a corresponding clutch (CM), in order to form its range gear ratio combination, wherein the middle speed range includes at least one of the speed steps for the power delivery which lies below at least one of the speed steps of the lower speed range and includes at least one other of the speed steps for the power delivery which lies above at least one of the speed steps of the upper speed range.

13. A gearbox according to claim 11 or 12, characterized in that the input set of the rotatable gearwheels includes at least one each of the gearwheels (GRI, GR2, GRR) which are rotatably mounted on each of the change-speed gear countershafts (S2, S3, S4).

14. A gearbox according to any of claims 10 to 13, characterized by at least three change-speed gear countershafts (S2, S3, S4).

15. A gearbox according to any of claims 10 to 14, characterized in that a plurality of gearwheels (GR2, GRA; GR3, GRBB, BRBA; GR4, GR1, GRC) are mounted rotatably on each change-speed gear countershaft (S2, S3, S4) and can be locked by a corresponding plurality of clutches (C2, CA; C3, CB; C4, CC).

16. A gearbox according to any of claims 10 to 15, characterized in that
the speed steps for the power delivery comprise at least twelve gears rotating in the clockwise sense,
the middle and the lower speed ranges each include at least three gears rotating in the clockwise sense, which are interleaved with one another, and
the middle speed range includes at least two further gears rotating in the clockwise sense, which are interleaved with two gears rotating in the clockwise sense of the upper speed range.

17. A gearbox according to any of claims 10 to 16, characterized in that
the speed steps for the power delivery comprise at least six gears rotating in the anticlockwise sense,
the middle speed range includes at least one gear rotating in the anticlockwise sense, interleaved with at least one gear of the lower speed range rotating in the anticlockwise sense, and
the middle speed range includes at least one further gear rotating in the anticlockwise sense, interleaved with at least one gear rotating in the anticlockwise sense of the upper speed range.

18. A gearbox according to any of claims 10 to 17, characterized in that the speed steps for the power delivery comprise at least eighteen gears rotating in the clockwise sense and at least nine gears rotating in the anticlockwise sense.

19. A gearbox according to any of claims 1 to 18, characterized in that the input shaft (S1) has a drive end (16) for drive out, for example a PTO drive.

20. A method of providing a plurality of gears at the output end (18) of a rotatable output shaft (S6) using a rotatable input shaft (S1), which has an input part (14) for receiving power and on which an input gearwheel (GF1) is arranged rotationally fast, and a plurality of rotatable countershafts (S2, S3, S4, S5, S7), wherein at least one fixed gearwheel each (GF2, GF3, GF4, GF5, GF6, GF7) is arranged rotationally fast on the output shaft (S6) and the countershafts (S2, S3, S4, S5, S7), and at least one selectively lockable gearwheel each (GR1, GR2, GRR, GRA, GRBB, GRBA, GRC, GRH, GRM, GRL) is rotatably mounted thereon, wherein the rotatable gearwheels include an input set, which is in engagement with the input gearwheel (GF1), and wherein the shafts and gearwheels are arranged for locking an arbitrarily selected rotatable gearwheel (GR1, GR2, GRR) of the input set on its shaft (S4, S2, S3) to switch into drive a gear ratio combination, which can be selected arbitrarily from a set of gear ratio combinations, wherein the gear ratio combinations are formed by use of a plurality of gearwheels, characterized by the method step:
a plurality of rotatably mounted gearwheels (GRA, GRBB, GRBA, GRC) are switched into drive to form a gear ratio sequence which is on the one hand included in at least one of the gear ratio combinations for reducing the transmitted speed and which on the other hand is included in at least one other gear ratio combination for increasing the transmitted speed.

21. A method according to claim 20, characterized by the method steps:
interleaved arrangement of at least one gear of the middle speed range with at least one gear of the lower speed range and
interleaved arrangement of at least one other gear of the middle speed range with at least one gear of the upper speed range.

22. A method according to claim 21, in which the speed steps for the power delivery comprise at least twelve gears rotating in the clockwise sense, with the further method steps:
interleaved arrangement of at least three gears rotating in the clockwise sense of the middle speed range in relation to at least three gears rotating in the clockwise sense of the lower speed range and
interleaved arrangement of two further gears rotating in the clockwise sense of the middle speed range in relation to at least two gears rotating in the clockwise sense of the upper speed range.

23. A method according to claim 21 or 22, in which the speed steps for the power delivery comprise at least six gears rotating in the anticlockwise sense, with the further method steps:
interleaved arrangement of at least one gear rotating in the anticlockwise sense of the middle speed range with at least one gear rotating in the anticlockwise sense of the lower speed range and
interleaved arrangement of at least one further gear rotating in the anticlockwise sense of the middle gear range with at least one gear rotating in the anticlockwise sense of the upper speed range.

## Revendications

1. Transmission comportant un carter (11), ayant un arbre d'entrée (SI) monté de manière à pouvoir tourner dans le carter (11) avec une partie d'entrée (14) pour la réception de puissance et sur lequel un pignon d'entrée (GF1) est monté solidairement en rotation, un arbre de sortie (S6) monté de manière à pouvoir tourner dans le carter (11) avec une partie de sortie (18) pour la délivrance de puissance et plusieurs arbres intermédaires (S2,S3,S4,S5,S7) montés de manière à pouvoir tourner dans le carter (11), et dans lequel, respectivement, au moins un pignon fixe (GF2,GF3,GF4,GF5,GF6,GF7) est monté solidairement en rotation et, respectivement, au moins un pignon (GR1,GR2,GRR,GRA,GRBB,GRBA,GRC,GRH,GRM,GRL) qui peut être fixé, au choix, sur l'arbre correspondant par l'intermédiaire d'un accouplement associé (C1,C2,CR,CA,CB,CC,CH,CM,CL), est monté de manière à pouvoir tourner sur l'arbre de sortie (S6) et sur les arbres intermédaires (S2,S3,S4,S5,S7), et dans lequel les arbres, les pignons et les accouplements sont conçus et disposés de telle sorte que l'on peut régler différentes combinaisons de démultiplication et par conséquent différentes vitesses de rotation de sortie au moyen d'une liaison motrice au choix de ces composants, la transmission étant caractérisée en ce que plusieurs pignons (GRA,GRBB,GRBA,GRC), reliés selon une liaison motrice, sont montés de manière à pouvoir tourner pour former une séquence de démultiplication qui, d'une part, est contenue dans au moins l'une des combinaisons de démultiplication pour réduire la vitesse de rotation qui est transmise à ces pignons et qui, d'autre part, est contenue dans au moins une autre combinaison de démultiplication pour augmenter la vitesse de rotation qui est transmise à ces pignons.

2. Transmission selon la revendication 1, caractérisé en ce qu'au moins un arbre intermédiaire (S2,S3,S4) est associé à une partie de transmission à commutation et par au moins un autre arbre intermédiaire (S5,S7) et/ou l'arbre de sortie (S6) associés à une partie de transmission à groupe-relais.

3. Transmission selon la revendication 1 ou 2, caractérisée en ce que les pignons rotatifs contiennent un ensemble d'entrée de pignons (GR1,GR2,GRR), qui engrènent avec le pignon d'entrée (GF1), en ce que les arbres, les pignons et les accouplements sont disposés pour bloquer un pignon rotatif (GR1,GR2,GRR) sélectionné à volonté à partir de l'ensemble d'entrée sur son arbre (S4,S2,S3) au moyen de l'accouplement (C1,C2,CR) associé à ce pignon, et pour activer, selon une liaison motrice, une combinaison de démultiplication qui peut être choisie à volonté à partir d'un ensemble de combinaisons de démultiplication, et en ce que les combinaisons de démultiplication sont formées par utilisation de plusieurs des pignons pour fournir plusieurs échelons de vitesse de rotation sur la partie de sortie (18) de l'arbre de sortie (S6).

4. Transmission selon l'une quelconque des revendications 1 à 3, caractérisée en ce que la fréquence de transmission inclut plusieurs pignons (GRA,GRBB,GRBA,GRC), qui engrènent entre eux et sont montés de manière à pouvoir tourner.

5. Transmission selon l'une quelconque des revendications 1 à 4, caractérisée en ce qu'au moins quatre pignons sont montés de manière à pouvoir tourner sur les arbres (S2,S4,S3) et que la séquence de démultiplication comprend au moins quatre de ces pignons (GRA,GRBB,GRBA,GRC).

6. Transmission selon l'une quelconque des revendications 1 à 5, caractérisée en ce que la séquence de transmission contient deux pignons rotatifs (GRA,GRBB;GRBA,GRC), qui engrènent entre eux, et en ce que, respectivement, un pignon (GRBB,GRBA) de chaque couple est monté de manière à pouvoir tourner sur le même arbre (S3).

7. Transmission selon la revendication 6, caractérisée en ce que chacun des pignons (GRBB,GRBA) qui sont montés de manière à pouvoir tourner sur le même arbre (S3), peut être fixé au choix sur ce dernier par le même accouplement (CB).

8. Transmission selon l'une quelconque des revendications 1 à 7, caractérisée en ce que deux des pignons rotatifs (GRBB,GRBA) de la séquence de démultiplication sont agencés sous la forme de pignons doubles.

9. Transmission selon l'une quelconque des revendications 1 à 8, caractérisé en ce que la transmission délivre, sur son arbre de sortie (S6), respectivement plusieurs échelons de vitesse de rotation pour les deux sens de rotation.

10. Transmission selon l'une quelconque des revendications 1 à 9, caractérisée en ce qu'une partie de transmission à commutation possède un arbre intermédiaire de transmission à commutation (S2,S3,S4) monté rotatif sur le carter (11) et une partie de transmission à groupe-relais, qui comporte au moins un arbre intermédiaire de transmission à groupe-relais (S5,S7), sont montées rotatives dans le carter (11), les arbres, pignons et accouplements étant conçus et disposés de telle sorte que grâce à une liaison motrice de ces composants, établie au choix, on peut régler différents rapports de démultiplication de la transmission à commutation et par conséquent différentes vitesses de rotation respectivement dans des groupes de vitesse de rotation faibles, moyennes et élevées, groupes qui sont réglables à l'aide de la partie de transmission à groupe-relais, et en ce que
le groupe des faibles vitesses de rotation inclut la vitesse de rotation de sortie la plus faible de la transmission,
le groupe des vitesses de rotations élevées inclut la vitesse maximale de rotation de sortie de transmission, et
le groupe des vitesses de rotation moyennes inclut au moins une vitesse de rotation de sortie de la transmission, qui est inférieure à au moins une vitesse de rotation de sortie de transmission faisant partie du groupe des vitesses de rotation les plus faibles, ainsi qu'au moins une vitesse de rotation de sortie de transmission, qui est supérieure à au moins une vitesse de rotation de sortie de la transmission du groupe des vitesses de rotation les plus élevées.

11. Transmission selon la revendication 10, caractérisée en ce que les pignons rotatifs contiennent un ensemble d'entrée de pignons (GR1,GR2,GRR) qui engrènent avec le pignon d'entrée (GF1), en ce que les arbres, les pignons et les accouplements de la partie formant transmission à commutation sont disposés pour bloquer un pignon rotatif (GR1,GR2,GRR) choisi à volonté à partir de l'ensemble d'entrée sur son arbre (S4,S2,S3) au moyen de l'accouplement (C1,C2,C1) qui lui est associé, et l'ajouter, du côté entraînement, à une combinaison de démultiplication de la transmission à commutation, qui peut être choisie à volonté parmi un ensemble de combinaisons de démultiplication, et dans lequel les combinaisons de démultiplication de transmission à commutation sont formées par l'utilisation de plusieurs pignons pour fournir plusieurs résultats de transmission à commutation.

12. Transmission selon la revendication 10 ou 11, caractérisée en ce que la partie de la transmission à groupe-relais est conçue de manière à recevoir les résultats de la transmission à commutation et à les ajouter du côté entraînement, à une combinaison de démultiplication de transmission à groupe-relais, qui peut être sélectionnée au choix à partir d'un ensemble de combinaisons de démultiplication, les combinaisons de démultiplication de la transmission à groupe-relais étant formées par l'utilisation de plusieurs pignons de la partie de la transmission à groupe-relais, pour fournir au moins six étages de vitesses de rotation au niveau de la partie de sortie (18) de l'arbre de sortie (S6), en ce qu'une gamme de vitesses de rotation inférieures pour la délivrance de puissance est représentée par un pignon (GRL) qui est monté de manière à pouvoir tourner sur le premier arbre intermédiaire (SI) de la transmission à groupe-relais et qui peut être bloqué au choix par un accouplement associé (CL) sur l'arbre (S5), pour former une combinaison de démultiplication de transmission formant groupe-relais, la gamme des vitesses de rotation inférieures incluant les étages les plus faibles de vitesses de rotation pour la délivrance de puissance,
en ce qu'une gamme de vitesses de rotation supérieures pour la délivrance de puissance est représentée par au moins un pignon (GRH) qui est monté de manière à pouvoir tourner sur l'arbre de sortie (S6) et qui peut être bloqué au choix par un accouplement associé (CH) sur l'arbre de sortie (S6) pour former une combinaison de démultiplication de la transmission à groupe-relais, la gamme des vitesses de rotation supérieures incluant les étages de vitesses de rotation les plus élevés pour la délivrance de puissance et,
en ce qu'une gamme de vitesses de rotation moyennes pour la délivrance de puissance est représentée par au moins un pignon (GRM) qui est monté de manière à pouvoir tourner sur un arbre secondaire (S7) de la transmission à groupe-relais et qui peut être bloquée au choix par un accouplement associé (CM) sur l'arbre (S7), pour former une combinaison de démultiplication de transmission à groupe-relais, la gamme des vitesses de rotation moyennes contenant au moins l'un des étages de vitesses de rotation pour la délivrance de puissance, qui est situé au-dessous d'au moins l'un des étages de vitesses de rotation de la gamme des vitesses de rotation inférieures, et au moins un autre des étages de vitesses de rotation pour la délivrance de puissance, qui se situe au-dessus d'au moins l'un des étages de vitesses de rotation de la gamme des vitesses de rotation supérieures.

13. Transmission selon la revendication 11 ou 12, caractérisée en ce que l'ensemble d'entrée des pignons rotatifs inclut respectivement au moins l'un des pignons (GR1,GR2,GRR) monté de manière à pouvoir tourner sur chacun des arbres intermédaires (S2,S3,S4) de la transmission à commutation.

14. Transmission selon l'une quelconque des revendications 10 à 13, caractérisée en ce que la transmission à commutation comporte au moins trois arbres intermédaires (S2,S3,S4).

15. Transmission selon l'une quelconque des revendications 10 à 14, caractérisée en ce que plusieurs pignons (GR2,GRA;GR3,GRBB,GRBA;GR4,GR1,GRC) sont montés de manière à pouvoir tourner sur chaque arbre intermédiaire (S2,S3,S4) de la transmission à commutation et peuvent être bloqués au choix au moyen d'accouplements correspondants faisant partie de plusieurs accouplements (C2,CA;C3,CB;C4,CC).

16. Transmission selon l'une quelconque des revendications 10 à 15, caractérisée
en ce que les étages de vitesses de rotation pour la délivrance de puissance comprennent au moins douze rapports tournant dans le sens des aiguilles d'une montre,
en ce que la gamme des vitesses de rotation moyennes et la gamme des faibles vitesses de rotation contiennent chacune au moins trois vitesses tournant dans le sens des aiguilles d'une montre et imbriquées les unes dans les autres, et
en ce que la gamme des vitesses de rotation moyennes contient au moins deux autres vitesses qui tournent dans le sens des aiguilles d'une montre, cette gamme des vitesses de rotation moyennes et la gamme des vitesses de rotation supérieures étant imbriquées l'une dans l'autre.

17. Transmission selon l'une quelconque des revendications 10 à 16, caractérisée
en ce que les étages des vitesses de rotation pour la délivrance de puissance contiennent au moins six vitesses tournant dans le sens des aiguilles d'une montre,
en ce que la gamme des vitesses de rotation moyennes contient au moins une vitesse qui tourne en sens opposé des aiguilles d'une montre, et qui est imbriquée avec au moins une vitesse qui tourne en sens inverse des aiguilles d'une montre de la gamme des vitesses de rotation inférieures, et
en ce que la gamme des vitesses de rotation moyennes contient au moins une autre vitesse qui tourne en sens inverse des aiguilles d'une montre, et qui est imbriquée avec au moins une vitesse qui tourne en sens inverse des aiguilles d'une montre de la gamme des vitesses de rotation supérieures.

18. Transmission selon l'une quelconque des revendications 10 à 17, caractérisée en ce que les étages de vitesses de rotation pour la délivrance de puissance comprennent au moins dix-huit vitesses tournant dans le sens des aiguilles d'une montre et au moins neuf vitesses tournant en sens inverse des aiguilles d'une montre.

19. Transmission selon l'une quelconque des revendications 1 à 18, caractérisée en ce que l'arbre d'entrée (SI) comporte une extrémité menée (16) pour un moyen mené, par exemple un moyen mené d'arbre de prise de mouvement.

20. Procédé pour délivrer plusieurs rapports sur l'extrémité de sortie (18) d'un arbre de sortie rotatif (S6) moyennant l'utilisation d'un arbre d'entrée rotatif (SI) qui comprend, pour la réception de puissance, une partie entrée (14) et sur lequel est monté solidairement en rotation un pignon d'entrée (GF) et plusieurs arbres intermédaires rotatifs (S2,S3,S4,S5,S7), selon lequel respectivement au moins un pignon fixe (GF2,GF3,GF4,GF5,GF6,GF7) est monté solidairement en rotation et, respectivement, au moins un pignon (GR1,GR2,GRR,GRA,GRBB,GRBA,GRC,GHR,GRM,GRL) pouvant être bloqué au choix sur l'arbre de sortie (S6) et sur les arbres intermédaires (S2, S3,S4,S5,S7), est monté de manière à pouvoir tourner sur l'arbre correspondant selon lequel les pignons rotatifs contiennent un ensemble d'entrée qui engrène avec le pignon d'entrée (GF1), et selon lequel les arbres et les pignons sont disposés de manière à bloquer un pignon rotatif (GR1,GR2,GRR) qui peut être choisi à volonté à partir de l'ensemble d'entrée sur un arbre (S4,S2,S3) et ajouté, selon une liaison motrice, à une combinaison de démultiplication qui peut être choisie à volonté parmi un ensemble de combinaisons de démultiplication, les combinaisons de démultiplication étant formées au moyen de l'utilisation de plusieurs pignons, caractérisé par l'étape opératoire consistant à :
connecter selon une liaison motrice plusieurs pignons (GRA,GRBB,GRBA,GRC) montés de manière à pouvoir tourner, pour former une séquence de démultiplication qui, d'une part, est contenue dans au moins l'une des combinaisons de démultiplication pour réduire la vitesse de rotation qui est transmise à cette combinaison et qui, d'autre part, est contenue dans au moins une autre des combinaisons de démultiplication pour accroître la vitesse de rotation qui est transmise à cette combinaison.

21. Procédé selon la revendication 20, selon lequel les étages des vitesses de rotation pour la délivrance de puissance comprennent au moins six vitesses, qui sont situées dans une gamme de vitesses de rotation inférieures qui comprend les vitesses les plus faibles, dans une gamme de vitesses de rotation supérieures qui comprend les vitesses les plus élevées, et dans une gamme de vitesses de rotation moyennes, caractérisé par les étapes consistant à :
disposer d'une manière imbriquée au moins une vitesse de la gamme des vitesses de rotation moyennes avec au moins une vitesse de la gamme des vitesses de rotation inférieures, et
disposer d'une manière imbriquée au moins une autre vitesse de la gamme des vitesses de rotation moyennes avec au moins une vitesse de la gamme des vitesses de rotation supérieures.

22. Procédé selon la revendication 21, selon lequel les échelons des vitesses de rotation pour la délivrance de puissance comprennent au moins douze vitesses tournant dans le sens des aiguilles d'une montre, comportant les étapes opératoires consistant à :
disposer d'une manière imbriquée au moins trois vitesses de la gamme des vitesses de rotation moyennes et qui tournent dans le sens des aiguilles d'une montre par rapport à au moins trois vitesses de la gamme des vitesses de rotation inférieures et qui tournent dans le sens des aiguilles d'une montre, et
disposer, de façon imbriquée, deux autres vitesses de la gamme des vitesses de rotation moyennes et qui tournent dans le sens des aiguilles d'une montre par rapport à au moins deux vitesses de la gamme des vitesses de rotation supérieures et qui tournent dans le sens des aiguilles d'une montre.

23. Procédé selon la revendication 21 ou 22, selon lequel les étages de vitesses de rotation pour la délivrance de puissance comprennent au moins six vitesses tournant en sens inverse des aiguilles d'une montre, comprenant les étapes opératoires consistant à :
disposer, d'une manière imbriquée au moins une vitesse de la gamme des vitesses de rotation moyennes et qui tourne en sens inverse des aiguilles d'une montre avec au moins une vitesse de la gamme des vitesses de rotation inférieures et qui tourne en sens inverse des aiguilles d'une montre, et
disposer, d'une manière imbriquée, au moins une autre vitesse de la gamme des vitesses de rotation moyennes, tournant en sens inverse des aiguilles d'une montre, avec au moins une vitesse de la gamme des vitesses de rotation supérieures et qui tourne en sens inverse des aiguilles d'une montre.
